# EUROPÄISCHE PATENTSCHRIFT

(11) **EP 0 664 197 B1**
(45) Veröffentlichungstag und Bekanntmachung des Hinweises auf die Patenterteilung: **17.03.1999**
(21) Anmeldenummer: 94119455.7
(22) Anmeldetag: 09.12.1994
(51) Int. Cl.: B29C 44/34, B29C 47/64

(54) **Verfahren und Vorrichtung zum Herstellen eines TPE-Schaumprofiles für die Bau- und Kfz.-Industrie**
Method and apparatus for manufacturing thermoplastic elastomere foam profiles for the construction and the automobile industry
Procédé et dispositif de fabrication de profilés en mousse thermoplastique élastomère pour l'industrie du bâtiment et de l'automobile

(30) Priorität: 19.01.1994 DE 4401432
(43) Veröffentlichungstag der Anmeldung: 26.07.1995
(73) Patentinhaber: HERMANN BERSTORFF Maschinenbau GmbH, D-30627 Hannover (Kleefeld) (DE)
(72) Erfinder: Deseke, Otto, Dipl.-Ing., D-31275 Lehrte (DE); Meyke, Joachim, Dipl.-Ing., D-30559 Hannover (DE); Pfeiffer, Armin, Dipl.-Ing., D-29227 Celle (DE)

(56) Entgegenhaltungen:
- WO-A-92/18326
- US-A- 3 440 309
- US-A- 4 659 230

## Beschreibung

Die Erfindung betrifft ein Verfahren sowie eine für die Durchführung des Verfahrens geeignete Vorrichtung zum Herstellen eines TPE-Schaumprofiles (thermoplastische Elastomere, z.B. auf Olefin- oder Styrolbasis) für die Bau- und Kfz-Industrie, z.B. für Fenster- und Türdichtungen.

Bisher war es nicht möglich, im industriellen Maßstab TPE-Schaumprofile physikalisch, mit einem Treibmittel ohne FCKW-Bestandteile, aufzuschäumen. Es wurden viele Versuche unternommen, z.B. Wasser oder Dampf als Treibmittel für TPE einzusetzen. Es ist jedoch bisher nicht gelungen, derartige Treibmittel mikrofein mit TPE zu vermischen. Entweder entstanden zu grobe oder sehr ungleichmäßige Schaumbläschen, so daß der Werkstoff TPE, der hervorragende Bewitterungseigenschaften hat und insbesondere sehr gut eingefärbt werden kann, bisher für diesen Zweck nicht eingesetzt werden konnte.

Durch die WO 92/18326 ist zwar bereits ein Verfahren bekannt geworden, bei dem Wasser in eine TPE-Schmelze als umweltfreundliches Treibmittel eingegeben wird. Das Eindüsen des Wassers erfolgt hier jedoch in dem Bereich der Schnecke eines Extruders, der keine speziell ausgebildeten Scherbereiche aufweist. Wie sich gezeigt hat, ist mittels des beschriebenen Verfahrens eine ausreichend gleichmässige und feine Vermischung von Wasser und TPE nicht möglich.

Durch die DE-OS 15 29 990 ist außerdem bereits ein Extruder bekannt geworden, dessen Schnecke in regelmäßigen Abständen mit blisterartig gestalteten Verteilerstücken versehen ist, die an ihrer Oberfläche mit Längsnuten versehen sind. Die Längsnuten dienen der Verteilung des jedem Verteilerstückes exakt im Bereich des Blisters zugeführten Treibmittels in der Schmelze. Hier verhindert jedoch gerade auch die Anordnung der Längsnuten die problematische Feinstverteilung von Wasser in der TPE-Schmelze. Auch hier sind folglich TPE-Schaumprofile mit einer gleichmäßigen, mikrofeinen Struktur nicht herstellbar.

Aus der DE-AS 15 69 412 ist es weiterhin bekannt geworden, auf der Schnecke eines Extruders einen Blister anzuordnen. Diesem Blister kommt hier jedoch die Aufgabe zu, zu verhindern, daß das sich in der sich anschließenden Mischzone zugeführte flüchtige Treibmittel in den Zufuhrtrichter zurückdringt und nach außen entweicht. Das Treibmittel wird hier im übrigen im Bereich einer mit gerillten Mischelementen versehenen Mischzone zugeführt, in der eine Feinverteilung von Wasser als Treibmittel in der Schmelze gleichfalls nicht erreichbar ist.

Ferner ist aus der US-A-4 659 230 ein Extruder zum Vermischen eines Zusatzstoffes niedriger Viskosität mit einer Polymerschmelze hoher Viskosität bekannt, dessen Schnecke zwei Blister aufweist, zwischen denen ein Zahnkränze aufweisender Zahnkranzbereich angeordnet ist. Bei diesem Extruder wird der Zusatzstoff im Zahnkranzbereich zugeführt.

Es ist die Aufgabe der Erfindung, ein Verfahren und eine für die Durchführung des Verfahrens geeignete Vorrichtung vorzuschlagen, mit dem TPE-Schaumprofile in hervorragender Weise als aufgeschäumte Profile mit einer sehr gleichmäßigen, mikrofeinen Struktur hergestellt werden können.

Die Aufgabe wird gelöst durch ein Verfahren, wie beschrieben in Patentanspruch 1. Eine für die Durchführung des Verfahrens hervorragend geeignete Vorrichtung wird in Anspruch 2 offenbart.

Eine in einem Extruder hergestellte TPE-Schmelze wird auf eine Temperatur von 180° C erwärmt. Gleichzeitig wird ein Schmelzedruck von etwa 100 bar in dem Extruder aufgebaut. In diese Schmelze wird dann Wasser eingedüst. Anschließend wird das einen Druck von etwa 100 bar und eine Temperatur von 180° C aufweisende Schmelze/Wassergemisch einer definierten Zweistufenscherung unterworfen. Nach der Zweistufenscherung liegt eine mikrofeine Verteilung des Wassers in der Schmelze vor. Danach wird das Schmelze/Wassergemisch weiterhin einer intensiven Vermischung unterworfen, um so die erreichte Homogenität aufrechtzuerhalten. In einer Profildüse wird das Gemisch letztlich zu seiner äußeren Kontur ausgeschäumt. Nach einer Abkühlung wird das so hergestellte Profil aufgewickelt.

Physikalisch-chemische Überprüfungen eines so hergestellten Profiles haben gezeigt, daß äußerst gleichmäßige mikrofeine Poren in dem Profil vorliegen, ohne daß übliche, jedoch sehr umweltschädliche FCKW-Treibmittel eingesetzt werden mußten.

Ein Ausführungsbeispiel einer Vorrichtung zur Durchführung des Verfahrens wird in den Zeichnungen gezeigt.

Es zeigen:
- Fig. 1: einen Längsschnitt durch einen schematisiert dargestellten Extruder.
- Fig. 2: einen Längsschnitt durch das Verfahrensteil des Extruders.

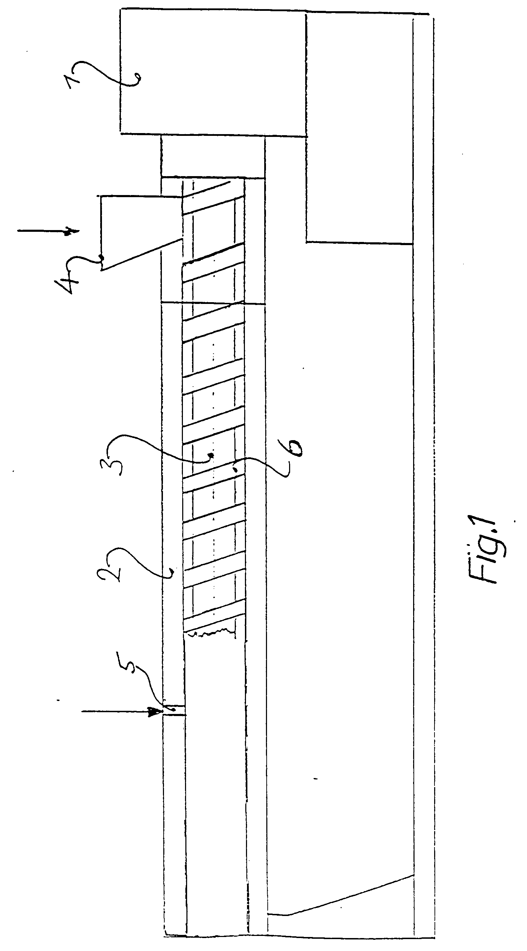

Der in Fig. 1 gezeigte Extruder weist einen Antrieb 1, einen Zylinder 2, eine Schnecke 3, eine Kunststoffeinfüllöffnung 4 sowie ein Wassereinspritzventil 5 auf.

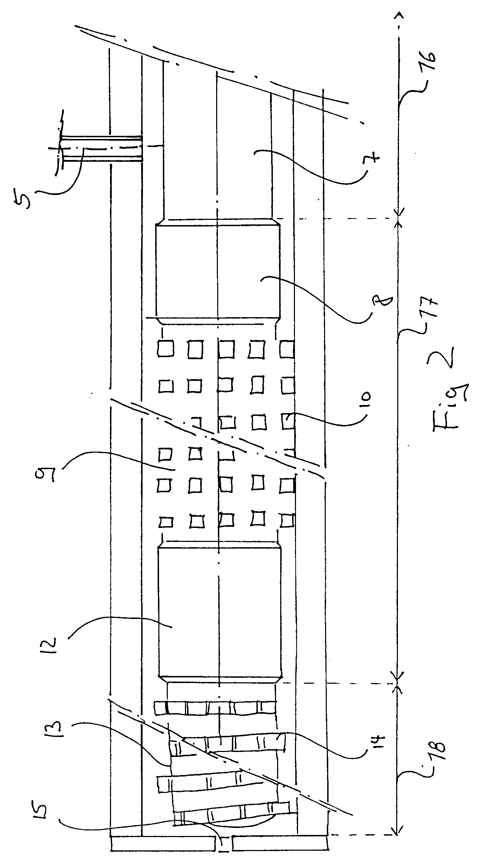

In Fig. 2 wird der vordere Abschnitt des Extruders im Detail gezeigt.

Durch den Extruderzylinder 2 wird das Einspritzventil 5 für das einzudüsende Wasser geführt. An der Einspritzstelle sind keine Schnekkenstege 6, wie in Fig. 1 gezeigt, sondern ein freier Schneckenkern 7.

Das Schmelze/Wassergemisch wird dann durch die Schneckenförderung im ersten Bereich des Extruders (Fig. 1) über den ersten Blister 8 (Fig. 2) gepreßt. In dem Spalt zwischen dem Blister 8 und der Zylinderinnenwandung erfährt die Mischung eine intensive Scherung, die zu einer sehr feinen Verteilung des Wassers in der Schmelze führt. Danach gelangt die Mischung in einen Zahnkranzbereich 9, der aus mehreren, aufeinander folgenden Zahnkränzen 10 besteht.

Danach erfolgt die zweite Scherung, wenn das TPE-Schmelze-Wassergemisch über den Blister 12 gepreßt wird, so daß eine nochmalige Reduzierung der Tropfengröße und Verteilung des Wassers in der Schmelze stattfindet.

In dem nachfolgenden Mischabschnitt 13 wird durch senkrecht angeordnete Zahnscheiben 14 die Mischgüte aufrechterhalten und gleichzeitig durch Wärmeaustausch mit der Zylinderinnenwnadung die erforderliche Gemischtemperatur eingestellt. Danach erfolgt eine Auspreßung des TPE-Schmelze/Wassergemisches durch die Profildüse 15. Das aus der Düse 15 austretende Profil schäumt durch die Druckentlastung in vorherbestimmbarem Maße, entsprechend der eingedüsten Wassermenge, auf, wird in einer nicht gezeigten Kühleinrichtung abgekühlt und aufgewickelt.

In der nachfolgenden Tabelle werden Versuchsergebnisse aufgezeigt, die zu hervorragenden TPE-Schaumprofilen führten. Dabei wurde insbesondere durch Mikroschnitte des Profils die Gleichmäßigkeit der Poren und die jeweilige Porengröße bewertet.

| Versuch: | 1. | 2. | 3. | 4. | 5. |
|---|---|---|---|---|---|
| Massetemperatur °C | 240 | 240 | 205 | 200 | 190 |
| Massedruck bar | 80 | 80 | 105 | 110 | 120 |
| Schneckendurchmesser mm | 90 | 90 | 90 | 90 | 90 |
| Abstand Einspritzstelle zum ersten Blister | 1,2 D | 1,2 D | 1,5 D | 1,5 D | 2 D |
| Schneckendrehzahl UpM | 25 | 30 | 35 | 40 | 40 |
| Länge des Homogenisierbereiches mm | 720 | 540 | 450 | 400 | 400 |
| Abstand zwischen zwei Blistern eines Zweistufenbereiches mm | 270 | 270 | 270 | 90 | 180 |
| Anzahl der Zweistufenbereiche | 2 | 3 | 5 | 6 | 8 |

- Versuch 1:: schlechte Einmischung des Wassers, inhomoge große Zellen. Die Temperatur ist zu hoch, die Drehzahl war zu niedrig und der Abstand zwischen den Blistern zu groß.
- Versuch 2:: schlechte Einmischung des Wassers, die Drehzahl zu niedrig und der Abstand zwischen den Blistern zu groß.
- Versuch 3:: große inhomoge Zellen und immer noch eine zu rauhe Oberfläche des Profiles.
- Versuch 4:: gute Einmischung, homogene Zellstruktur.
- Versuch 5:: homogene Zellstruktur, kleine Zellen und gute Oberfläche des Profiles.

## Patentansprüche

1. Verfahren zum Herstellen eines aufgeschäumten TPE-Profiles mittels des umweltfreundlichen Treibmittels Wasser, wobei in einen Extruder TPE in Granulatform eingegeben und aufgeschmolzen wird,
wobei in die etwa eine Temperatur von 180 bis 210°C und einen Druck von etwa 100 bis 120 bar aufweisende TPE-Schmelze vor einem ersten Blister (8) eines Zweistufenscherbereiches (17) des Extruders Wasser in einer Menge bis 5 Gew.-%, bezogen auf den Schmelzedurchsatz eingedüst wird, und dann das TPE-Schmelze/ Wassergemisch einer definierten mehrstufigen Scherung, mindestens jedoch einer Zweistufenscherung unterworfen wird,
wobei zwischen den beiden Scherstufen ein definierter Abstand von 1 bis 4 D (D = Schneckendurchmesser) eingehalten wird,
wobei zwischen den Scherstufen eine intensive Vermischung des TPE-Schmelze/Wassergemisches durchgeführt wird, und
wobei nach Passieren der zweiten Scherstufe eine weitere Längsmischung und Temperatureinstellung des Gemisches erfolgt und die Mischung anschließend durch eine Profildüse (15) extrudiert, das Profil aufgeschäumt, gekühlt und aufgewickelt oder abgelängt wird.

2. Vorrichtung zur Durchführung des Verfahrens nach Anspruch 1, bestehend aus einem Extruder mit einem Antrieb (1) und einer in einem Zylinder (2) rotierenden, fördernden Schnecke (3), einem, eine Aufschmelzung bewirkenden Förderbereich (16) und einen Scher- und Homogenisierungsbereich (17, 18) sowie mit einem im Bereich vor dem Scher- und Homogenisierbereich (17, 18) durch die Zylinderwandung ragenden Wassereinspritzventil (5),
wobei der Scher- und Homogenisierbereich (17, 18) sich aus einem oder mehreren Zweistufenscherbereichen (17) und einem Intensivmischbereich (18) zusammensetzt, wobei der Zweistufenscherbereich (17) eingangsseitig einen ersten Blister (8), im mittleren 1 bis 4 D (D = Schneckendurchmesser) langen Teil einen Zahnkränze (10) aufweisenden Zahnkranzbereich (9) und ausgangsseitig einen zweiten Blister (12) aufweist, und wobei der Homogenisierbereich (18) senkrecht zur Förderrichtung angeordnete Zahnscheiben (14) aufweist.

## Claims

1. Method of producing a foamed TPE profile by means of the environmentally friendly foaming agent water, wherein TPE is introduced into an extruder in granular form and melted, wherein water is sprayed into the TPE melt upstream of a first obstruction member (8) of a two-stage shearing section (17) of the extruder in a quantity up to 5 % by wt. relative to the melt throughput, said melt having, for example, a temperature of 180 to 210° C and a pressure of, for example, 100 to 120 bar, and then the mixture of TPE melt and water is subjected to a specific multi-stage shearing, but at least a two-stage shearing, wherein a specific spacing of 1 to 4 D (D = screw diameter) is maintained between the two shearing stages, wherein an intensive mixing of the mixture of TPE melt and water is effected between the shearing stages, and wherein an additional longitudinal mixing and temperature setting of the mixture is effected after the second shearing stage has been passed, and the mixture is subsequently extruded through a profile nozzle (15), and the profile is foamed, cooled and wound or cut to length.

2. Apparatus for accomplishing the method according to claim 1, comprising an extruder provided with a drive unit (1) and a conveying screw (3), which rotates in a cylinder (2), a conveying section (16) which effects a melting process, and a shearing and homogenising section (17, 18), as well as being provided with a water injection valve (5), which protrudes through the cylinder wall in the region upstream of the shearing and homogenising section (17, 18), wherein the shearing and homogenising section (17, 18), is formed from one or more two-stage shearing sections (17) and an intensive mixing section (18), wherein the two-stage shearing section (17) has a first obstruction member (8) at the input end, a toothed ring section (9), having toothed rings (10), in the central part having a length of 1 to 4 D (D = screw diameter), and a second obstruction member at the output end, and wherein the homogenising section (18) has toothed discs (14) disposed perpendicular to the direction of conveyance.

## Revendications

1. Procédé de fabrication d'un profilé moussé en élastomère thermoplastique, à l'aide de l'eau utilisée comme porophore non polluant, dans lequel l'élastomère thermoplastique est introduit dans l'extrudeuse sous forme de granulés pour y être fondu,
dans lequel, en amont d'un premier dispositif de thermoformage (8) d'une section en deux étapes (17) de l'extrudeuse, une quantité d'eau allant jusqu'à 5 % en poids de la quantité de masse fondue est injectée dans la masse fondue d'élastomère thermoplastique, qui présente une température comprise entre 180 et 210 °C environ et une pression comprise entre 100 et 120 bar environ, et ensuite le mélange masse fondue d'élastomère thermoplastique et eau est soumis à un cisaillement défini, réalisé en plusieurs étapes, à savoir un cisaillement en deux étapes au moins,
dans lequel une distance définie, entre 1 et 4 D (D = diamètre de la vis transporteuse), est maintenue entre les deux étapes de cisaillement,
dans lequel un brassage intensif du mélange masse fondue d'élastomère thermoplastique et eau est exécuté entre les étapes de cisaillement,
dans lequel, à la sortie de la deuxième étape de cisaillement, sont exécutés un autre brassage en sens long et un réglage de la température du mélange, et ensuite le mélange est extrudé dans une filière (15), le profilé est moussé, refroidi et embobiné ou coupé à longueur.

2. Dispositif destiné à la mise en oeuvre du procédé selon la revendication 1, comprenant une extrudeuse formée par un moteur (1) et une vis sans fin (3) tournant dans un cylindre (2) et assurant le transport, une zone de transport (16) provoquant le moussage et une zone de cisaillement et d'homogénéisation (17, 18), ainsi qu'une buse d'injection de l'eau (5), s'avançant en saillie sur la paroi du cylindre, située dans une zone en amont de la zone de cisaillement et d'homogénéisation (17, 18),
dans lequel la zone de cisaillement et d'homogénéisation (17, 18) est formée par une ou plusieurs zones de cisaillement en deux étapes (17) et une zone de brassage intensif (18), la zone de cisaillement en deux étapes (17) comportant du côté de l'entrée un premier dispositif de thermoformage (8), une zone (9) formée par des couronnes dentées (10), située dans la partie centrale mesurant entre 1 et 4 D (D = diamètre de la vis transporteuse), et du côté de la sortie un deuxième dispositif de thermoformage (12), et dans lequel la zone d'homogénéisation (18) est munie de disques dentés (14) perpendiculaires au sens du transport.
